(19) Europäisches Patentamt
European Patent Office
Office européen des brevets

(11) **EP 4 703 765 A1**

(12) **EUROPEAN PATENT APPLICATION**

(43) Date of publication:
**04.03.2026 Bulletin 2026/10**

(21) Application number: **25198462.1**

(22) Date of filing: **27.08.2025**

(51) International Patent Classification (IPC):
**G01S 7/4863** (2020.01)   **G01S 7/487** (2006.01)
**G01S 17/42** (2006.01)   **G01S 17/10** (2020.01)

(52) Cooperative Patent Classification (CPC):
**G01S 7/4863; G01S 7/487; G01S 17/10;
G01S 17/42**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **29.08.2024   CN 202411207669**

(71) Applicant: **Suteng Innovation Technology Co.,
Ltd.
Shenzhen City Guangdong 518000 (CN)**

(72) Inventor: **GONG, Changsheng
Shenzhen City (CN)**

(74) Representative: **Ran, Handong et al
Maucher Jenkins
Seventh Floor Offices
Artillery House
11-19 Artillery Row
London SW1P 1RT (GB)**

(54) **SIGNAL RECEIVING DEVICE, METHOD AND LIDAR SYSTEM**

(57)   The application provides a signal receiving device, method and LiDAR system. The signal receiving device includes N photosensitive unit groups, and the photosensitive unit group includes a plurality of photosensitive units, the photosensitive unit group is used for receiving echo light beams and outputting corresponding sampling data, a data selection module is connected with the N photosensitive unit groups, and is used for selecting target sampling data according to pixel ranging requirements, a calculation module is connected with the data selection module, is used for carrying out echo data processing and calculation according to the target sampling data, obtaining pixel results, selecting the sampling data output by the fused photosensitive unit group according to the pixel ranging requirements, and determining the pixel results based on the sampling data, so that the ranging performance of the LiDAR can be effectively improved without increasing LiDAR transmitting power and number of scans.

10

11

111

light source
system

transmitting module

scanning
system

12

target object

control system

14

receiving
module

13

FIG. 1

**Description**

## TECHNICAL FIELD

The application relates to the technical field of LiDAR, in particular to a signal receiving device, method and LiDAR system.

## BACKGROUND

A LiDAR is a system for detecting the position and speed of a target by emitting a laser beam, and can detect the reflectivity of an object for target recognition in addition to the distance of the object.

The ranging capability of a LiDAR is one of very important performance indexes of the LiDAR, and in the case that the detection efficiency of a receiving device of a receiving module is fixed, in order to improve the ranging capability of the LiDAR, the emission power of an emission device of an emission module is often increased or the number of scans is increased, which however causes the overall power consumption of the LiDAR to increase.

Therefore, how to improve the ranging capability of the LiDAR without increasing the emission power or the number of scans is an urgent problem to be solved.

## SUMMARY

The application provides a signal receiving device, method and LiDAR system, which can improve the ranging capability of the LiDAR without increasing the emission power or the number of scans.

In a first aspect, the application provides a signal receiving device, comprising:

N photosensitive unit groups, wherein each photosensitive unit group comprises a plurality of photosensitive units, and each photosensitive unit group is configured to receive an echo light beam and output corresponding sampling data;

a data selection module, connected with the N photosensitive unit groups, and configured to select target sampling data according to a pixel ranging requirement;

a calculation module, connected with the data selection module, and configured to perform echo data processing and calculation according to the target sampling data to obtain a pixel result.

In an implementation form of the first aspect, the signal receiving device further comprises:
a superimposition unit, wherein each photosensitive unit group is connected with one superimposition unit, and each superimposition unit is configured to add the electrical signals collected by the photosensitive units in the photosensitive unit group to obtain the sampling data of the photosensitive unit group.

In an implementation form of the first aspect, the data selection module comprises a data selector array, wherein the data selector array comprises a plurality of data selectors, the output of each data selector corresponds to one pixel result, and each data selector is configured to determine a target photosensitive unit group according to a corresponding pixel ranging requirement and output the sampling data output by the target photosensitive unit group to the calculation module.

In an implementation form of the first aspect, the calculation module comprises:

a weighted fusion unit, connected with the data selector, and configured to perform weighted fusion on the sampling data output by the data selector to obtain a fusion result;

a data calculation unit, connected with the weighted fusion unit, and configured to perform echo data processing and calculation according to the fusion result to obtain the pixel result.

In an implementation form of the first aspect, the photosensitive unit comprises a silicon photomultiplier and/or an avalanche photodiode.

In a second aspect, an embodiment of the present application provides a signal receiving method, applied to the signal receiving device in the first aspect or any implementation form of the first aspect, and comprising:

allocating target sampling data to a pixel according to the pixel ranging requirement, the target sampling data being sampling data output by a target photosensitive unit group;

determining a pixel result of the pixel according to the target sampling data.

In an implementation form of the second aspect, the allocating target sampling data to the pixel according to the pixel ranging requirement comprises:

> determining a target photosensitive unit group corresponding to each pixel according to the pixel ranging requirement;
> obtaining sampling data output by the target photosensitive unit group.

In an implementation form of the second aspect, when the pixel ranging requirement is an equal-interval field of view distribution requirement, the number of target photosensitive unit groups corresponding to each pixel is equal. when the pixel ranging requirement is an unequal-interval field of view distribution requirement, the numbers of target photosensitive unit groups corresponding to different pixels are partially or entirely unequal.

In an implementation form of the second aspect, the determining a pixel result of the pixel according to the target sampling data comprises:

> if the target sampling data comprises sampling data output by one photosensitive unit group, performing echo data processing and calculation according to the sampling data output by the photosensitive unit group to obtain the pixel result;
> if the target sampling data comprises sampling data output by a plurality of photosensitive unit groups, performing fusion on the sampling data output by the plurality of photosensitive unit groups to obtain a fusion result, and performing echo data processing and calculation according to the fusion result to obtain the pixel result.

In an implementation form of the second aspect, the determining a pixel result of the pixel according to the target sampling data comprises:

> if the target sampling data comprises sampling data output by one photosensitive unit group, performing echo data processing and calculation according to the sampling data output by the photosensitive unit group to obtain the pixel result;
> if the target sampling data comprises sampling data output by a plurality of photosensitive unit groups, performing fusion on the sampling data output by the plurality of photosensitive unit groups to obtain a fusion result, and performing echo data processing and calculation according to the fusion result to obtain the pixel result.

In a third aspect, an embodiment of the present application provides a LiDAR system, comprising the signal receiving device in the first aspect or any implementation form of the first aspect.

In a fourth aspect, an embodiment of the present application provides a terminal device, comprising a processor, a memory, and a computer program stored in the memory and executable on the processor, wherein the processor executes the computer program to implement the method in the second aspect or any optional implementation form of the second aspect.

In a fifth aspect, the embodiment of the application provides a computer readable storage medium, the computer readable storage medium storing a computer program, and the computer program is executed by a processor to implement the method in the second aspect or any optional manner of the second aspect.

In a sixth aspect, the embodiment of the application provides a computer program product, when the computer program product is run on a terminal device, the computer program product causes the terminal device to perform the method in the second aspect or any optional manner of the second aspect.

Compared with the prior art, the embodiment of the application has the following beneficial effects:

The signal receiving device, the method, the LiDAR system, the terminal device and the computer readable storage medium can select the sampling data output by the plurality of groups of photosensitive units according to the pixel ranging requirement based on the data selection module to determine the pixel result, and the ranging performance of the LiDAR can be effectively improved without increasing the LiDAR transmission power and the number of scans.

## BRIEF DESCRIPTION OF DRAWINGS

In order to more clearly illustrate the technical solutions in the embodiments of the present application, the following briefly describes the drawings required by the embodiments or the prior art description. Obviously, the following drawings in the description are only some embodiments of the present application, and other drawings can be obtained according to these drawings without creative labor for a person skilled in the art.

> FIG. 1 is a schematic diagram of a structure of a LiDAR in the embodiment of the present application;
> FIG. 2 is a schematic diagram of a structure of a signal receiving device;
> FIG. 3 is a schematic diagram of a structure of a group of photosensitive units provided in the embodiment of the present application;

FIG. 4 is a diagram of a corresponding relationship between a group of photosensitive units and sampling data in the embodiment of the present application;

FIG. 5 is a schematic diagram of a structure of another group of photosensitive units provided in the embodiment of the present application;

FIG. 6 is a schematic diagram of a structure of another signal receiving device provided in the embodiment of the present application;

FIG. 7 is a schematic diagram of a process in which the superposition unit superposes the electric signals collected by the photosensitive units to obtain the sampling data corresponding to the group of photosensitive units;

FIG. 8 is a schematic diagram of a structure of still another signal receiving device provided in the embodiment of the present application;

FIG. 9 is an application example diagram of a signal receiving device provided in the embodiment of the present application;

FIG. 10 is a diagram of an equal-interval pixel distribution result provided in the embodiment of the present application;

FIG. 11 is an application example diagram of another signal receiving device provided in the embodiment of the present application;

FIG. 12 is an application example diagram of still another signal receiving device provided in the embodiment of the present application;

FIG. 13 is a diagram of an unequal-interval pixel distribution result provided in the embodiment of the present application;

FIG. 14 is a schematic diagram of a structure of still another signal receiving device provided in the embodiment of the present application;

FIG. 15 is a schematic diagram of an implementation flow of a signal receiving method provided in the embodiment of the present application;

FIG. 16 is a schematic diagram of a structure of a terminal device according to an embodiment of the present application;

FIG. 17 is a schematic diagram of a structure of a computer readable storage medium according to an embodiment of the present application.

## DETAILED DESCRIPTION

In the following description, for purposes of explanation and not limitation, specific details are set forth, such as particular system configurations, techniques, etc., in order to provide a thorough understanding of the present embodiments. However, it will be apparent to those skilled in the art that the present application can be practiced in other embodiments that depart from these specific details. In other instances, detailed descriptions of well-known systems, devices, circuits, and methods are omitted so as not to obscure the description of the present application with unnecessary detail.

It is to be understood that the terminology "and/or" used in the present application specification and the appended claims herein is intended to cover any and all combinations of one or more of the associated listed items and includes all possible combinations thereof. In addition, in the description of the application specification and the appended claims herein, the terms "first," "second," "third," etc., are used merely to distinguish descriptors for the description, and are not to be construed as indicating or implying relative importance.

It is also to be understood that the references herein to "one embodiment" or "some embodiments" or "an embodiment", etc., indicate that a particular feature, structure, or characteristic described in connection with the embodiment is included in at least one embodiment of the present application. Thus, the appearances of the phrase "in one embodiment", "in some embodiments", "in other embodiments", in "additional embodiments", etc., in various places throughout this specification are not necessarily referring to the same embodiment, unless it is specified that a particular feature, structure, or characteristic is common to all the embodiments. The terms "comprise," "comprising," "include," "including," and "has" and their conjugates mean "including but not limited to", unless otherwise expressly specified.

The LiDAR is a LiDAR system which can detect the position and speed of a target by transmitting a laser beam. In addition to detecting the range of the object, the LiDAR can detect the reflectivity of the object for the target recognition. The working principle of the LiDAR is that the detection signal is transmitted to the target. After the detection signal reaches the target, the detection signal is reflected by the target to form echo data. The LiDAR receives the signal reflected by the target and determines the information about the target, such as the range, position, height, speed, attitude, shape, and reflectivity of the target, thereby realizing the target detection, target tracking, and target recognition. The reflectivity of the object refers to the percentage of the radiation energy reflected by the object to the total radiation energy of the incident signal. The reflectivities of different objects are different and mainly determined by the surface property of the object, the wavelength of the incident signal, and the incident angle.

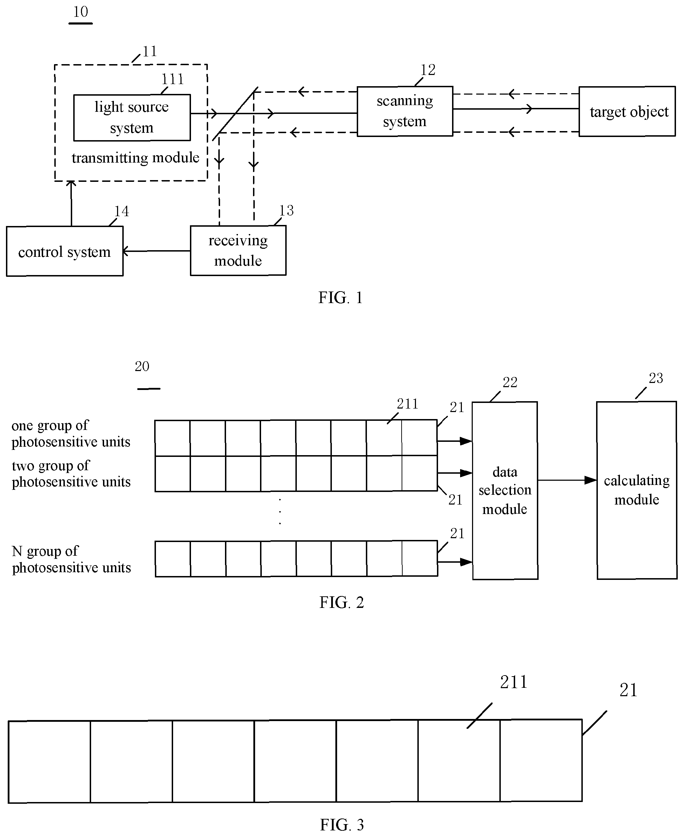

For example, please refer to FIG. 1, FIG. 1 shows a schematic diagram of a structure of a laser LiDAR. As shown in FIG. 1, a LiDAR 10 generally comprises a transmitting module 11, a scanning system 12, a receiving module 13 and a control system 14. The transmitting module 11 can comprise a light source system 111.

The light source system 111 is used for generating a laser beam required by the LiDAR 10 for detection, and specifically, the light source system 111 can comprise a laser and an emitting lens group or the like. The scanning system 12 is used for angular deflection of the laser beam generated by the light source system 111, so that the laser beam can hit different positions at different time instants. The scanning system 12 can be a mechanical scanning system (that is, a rotary driving platform), or can be a semi-solid-state scanning system (that is, a rotating mirror, a vibrating mirror or a combination of both), and the application does not impose a unique limitation on the form of the scanning system.

It can be understood that a LiDAR in the application can also be a solid-state laser LiDAR, and scanning is achieved by controlling light sources at different angles to emit sequentially. After the laser beam emitted by the light source system arrives at a target object and is reflected by the target object, a reflected light pulse is received by a receiving sensor 131 in the receiving module 13, and then corresponding detection information is generated by a back echo signal processing circuit through processing of a back echo signal.

The ranging capability of a LiDAR is one of the important performance indices of the LiDAR. When the detection efficiency of the receiving device of the receiving module is fixed, the ranging capability of the LiDAR can be improved by increasing the transmission power of the transmission device of the transmission module or increasing the number of scans, etc., but this leads to an increase in the overall power consumption of the LiDAR.

Therefore, how to improve the ranging capability of the LiDAR without increasing the transmission power or the number of scans is a problem to be solved urgently.

To this end, embodiments of the present application provide a signal receiving device which can select sampling data output by multiple groups of photosensitive units according to a pixel ranging requirement on the basis of a data selection module so as to determine a pixel result, thus effectively improving the ranging capability of the LiDAR without increasing the LiDAR transmission power and the number of scans.

The signal receiving method provided in the embodiments of the present application is explained in detail below.

Referring to FIG. 2, FIG. 2 illustrates a schematic structural diagram of a signal receiving device provided in the embodiments of the present application. As shown in FIG. 2, the signal receiving device 20 includes N groups of photosensitive units 21, a data selection module 22 and a calculating module 23.

The groups of photosensitive units 21 are connected with the data selection module 22, and the data selection module 22 is connected with the calculating module 23.

In specific application, as shown in FIG. 2, each group of photosensitive units 21 in the N groups of photosensitive units 21 includes multiple photosensitive units 211, and the photosensitive units 211 are used for receiving an echo light beam and outputting corresponding sampling data. N is a positive integer greater than 2.

In specific application, the photosensitive unit 211 can be an avalanche photodiode (APD) or a silicon photomultiplier (SiPM).

As can be appreciated, the numbers of photosensitive units 211 in different groups of photosensitive units 21 can be the same or different. The embodiments of the present application are exemplary illustrated by taking an example of same number of photosensitive units 211 in different groups of photosensitive units 21. FIG. 3 illustrates a possible schematic structural diagram of a group of photosensitive units. As shown in FIG. 3, each group of photosensitive units 21 can include eight photosensitive units 211.

In some embodiments of the present application, the number of photosensitive units 211 in the group of photosensitive units 21 corresponding to the edge area is less than that in the group of photosensitive units 21 corresponding to the center detection area.

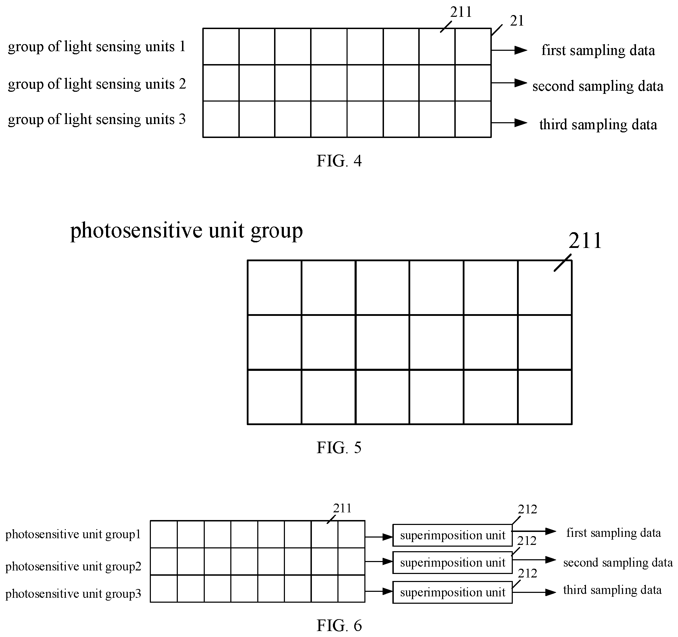

Each of the groups of photosensitive units 21 performs independent photosensitive sampling, that is, receives the echo light beam and outputs corresponding sampling data, thereby obtaining sampling data corresponding to each of the groups of photosensitive units 21. Taking the signal receiving device in FIG. 4 as an example, as shown in FIG. 4, the signal receiving device 20 includes three groups of photosensitive units 21, namely, a group of photosensitive units 1, a group of photosensitive units 2, and a group of photosensitive units 3. The group of photosensitive units 1 collects first sampling data, the group of photosensitive units 2 collects second sampling data, and the group of photosensitive units 3 collects third sampling data.

It should be noted that, the photosensitive unit group 21 can not only be a one-dimensional matrix mode as shown in FIG. 3 or FIG. 4, but can also be a two-dimensional matrix photosensitive unit group as shown in FIG. 5, that is, the photosensitive unit group in which a plurality of photosensitive units form a two-dimensional matrix having a plurality of rows and a plurality of columns.

In a specific application, the data selection module 22 is used to select target sampling data according to pixel ranging requirements. That is, the sampling data collected by the plurality of photosensitive unit groups is transmitted to the data selection module 22 for selection, and the data selection module 22 can select one or more groups of sampling data output by the photosensitive unit groups as the target sampling data according to the pixel ranging requirements.

Here, the pixel ranging requirements specifically can refer to detection accuracy requirements and detection field of view requirements, etc.

The higher the detection accuracy requirements, the more groups of sampling data of the photosensitive units can be selected as the target sampling data. The lower the detection accuracy requirements, the fewer groups of sampling data of the photosensitive units can be selected as the target sampling data. It can be understood that the detection accuracy requirements can be determined based on different application environments, for example, different ambient light intensities, the distribution of high reflectivity objects in a detection environment, or the like. For example, for a darker environment, in order to improve detection accuracy, more groups of sampling data collected by photosensitive units can be selected as each pixel result; for a brighter environment, since crosstalk is more likely to occur in brighter light, fewer groups of sampling data collected by photosensitive units can be selected for superimposition; and for a high-reflectivity object, fewer groups of sampling data of photosensitive units can be selected as the target sampling data.

Different detection fields of view can correspond to different pixel ranging needs, for example, the pixel density required by the central field of view is greater than that of the edge field of view.

In some embodiments of the application, the number of data selectors of different detection fields of view is different, and each data selector corresponds to one pixel result.

To realize the pixel density of the central detection region being greater than that of the edge detection region, the number of data selectors of the edge detection field of view can be set to be greater than that of the central detection field of view, thereby the point cloud density of the central detection field of view can be improved, that is, the detection accuracy of the central detection region can be improved.

It should be noted that the central detection region of the detection field of view of the LiDAR refers to the scanning central region, namely, a region where the target exists with a higher possibility and needs more accurate scanning, and the edge detection region refers to the detection region in the field of view except the central detection region, and the scanning angle is generally closer to the sky region or the ground region.

It is to be understood that the role of the data selection module 22 is to assign the superposed data of the photosensitive unit groups for each pixel, that is, for a certain pixel, to determine which groups of sampling data outputted by the photosensitive unit groups need to be selected to be fused. In selecting the sampling data outputted by the photosensitive unit groups, the number of the superposed sampling data of the photosensitive unit groups to be assigned for each pixel can be determined according to the required detection distance, i.e., the pixel ranging requirement. For example, the farther the detected target is required to be, the more groups of sampling data can be selected to be fused. Of course, when assigning the number of the superposed sampling data of the photosensitive unit groups, the design requirements of the integrated optical-mechanical system can also be considered to assign the sampling data, for example, to meet the requirement of better anti- optical crosstalk, fewer sampling data outputted by the photosensitive unit groups can be selected to be fused.

In specific applications, it can be set in advance that the data selection module 22 needs to select which groups of sampling data outputted by the photosensitive unit groups as the target sampling data for each pixel.

In some implementations, the corresponding selection mapping table can be set in advance for different application scenarios. The role of the selection mapping table is to determine the input of the data selection module 22, that is, to select which groups of sampling data outputted by the photosensitive unit groups as the target sampling data. For example, for a highway driving scenario, the selection mapping table 1 can be set, and for a parking scenario, the selection mapping table 2 can be set. When it is determined that the device carrying the signal receiving device provided by the embodiment is operated in the highway driving scenario, the data selection module 22 determines the target sampling data corresponding to each pixel according to the selection mapping table 1. When it is determined that the device carrying the signal receiving device provided by the embodiment is operated in the parking scenario, the data selection module 22 can determine the target sampling data corresponding to each pixel according to the selection mapping table 2.

The calculation module 23 can perform echo data processing and calculation according to the target sampling data to obtain a pixel result.

In some implementations, the calculation module 23 can perform fusion calculation on the sampling data (i.e., the target sampling data) output by one or more groups of photosensitive unit groups selected by the data selection module to obtain a corresponding pixel result.

It should be noted that the signal receiving device 20 can finally output M pixel results, where M represents a positive integer, and M can be equal to or different from N.

In an embodiment of the present application, the fusion calculation on the target sampling data can be specifically weighted fusion. For example, when the target sampling data includes sampling data output by three groups of photosensitive unit groups, the fusion result after weighted fusion can be represented as:

$$\text{data\_sum} = \text{coe\_1} * \text{data\_group\_1} + \text{coe\_2} * \text{data\_group\_2} + \text{coe\_3} * \text{data\_group\_3};$$

wherein coe_1 represents a weight coefficient of the first group of photosensitive units, data_group_1 is the sampling data output by the first group of photosensitive units, coe_2 represents a weight coefficient of the second group of photosensitive units, data_group_2 is the sampling data output by the second group of photosensitive units, coe_3 represents a weight coefficient of the third group of photosensitive units, and data_group_3 is the sampling data output by the third group of photosensitive units.

It should be noted that the weight coefficients of different groups of photosensitive units can be related to the pixel distribution arrangement and the spot distribution. For example, when three groups of sampling data output by photosensitive unit groups are selected as the target sampling data, the weight coefficient of the photosensitive unit group located in the middle can be set to be higher, for example, 50%, and the weight coefficients of the photosensitive unit groups on both sides can be set to be lower, for example, 25%, etc. For another example, when the spot distribution is equal, the weight coefficients of each group of photosensitive units can be selected to be the same value.

In a specific application, the calculation module 23 can perform fusion calculation on the target sampling data corresponding to each pixel, and then perform calculation on the fusion result to obtain the pixel result corresponding to each pixel.

The pixel result includes but is not limited to distance, echo intensity, echo area value, reflectivity, echo pulse width, etc.

It should be noted that the calculation methods of the distance, the echo intensity, the echo area value, the reflectivity, and the echo pulse width can be implemented based on the existing calculation methods, and the present application does not repeat the details.

It should be noted that if the target sampling data only includes the sampling data output by one group of photosensitive units, echo data processing and calculation can be performed according to the sampling data output by the group of photosensitive units to determine the pixel result such as the distance, the echo intensity, the echo area value, the reflectivity, and the echo pulse width.

Therefore, the signal receiving device 20 can select the sampling data output by the plurality of groups of photosensitive units 21 according to the pixel ranging requirement, and determine the pixel result based on the data selection module 22, so that the ranging performance of the LiDAR can be effectively improved without increasing the LiDAR transmission power and the number of scans.

In an embodiment of the present application, each photosensitive unit 211 in the group of photosensitive units 21 collects an electric signal, and the sampling data can be obtained by superimposing the data collected by the photosensitive units 211 in the group of photosensitive units 21.

In an embodiment of the present application, as shown in FIG. 6, the signal receiving device 20 further comprises a superimposition unit 212, and each group of photosensitive units 21 is connected with one superimposition unit 212, and the superimposition unit 212 is used for superimposing the electric signals collected by each photosensitive unit 211 in the group of photosensitive units 21, and then obtaining the sampling data corresponding to the group of photosensitive units.

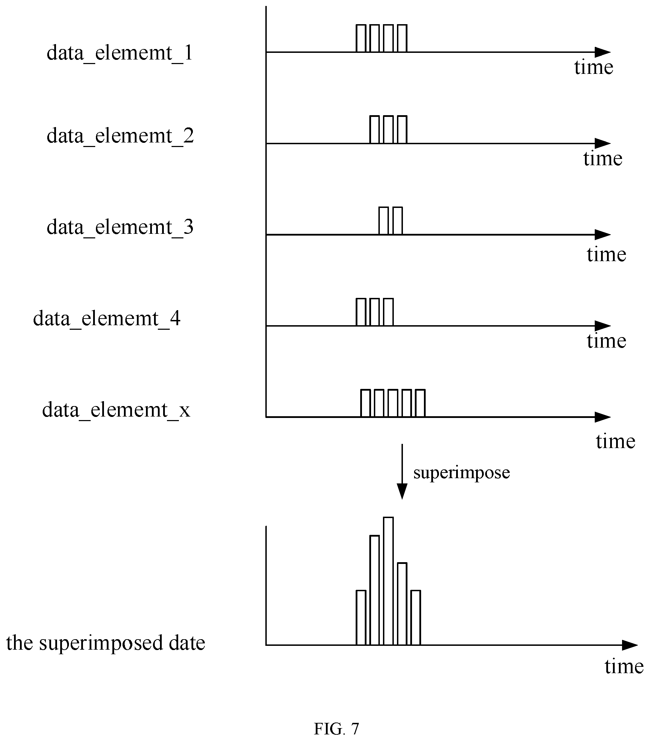

For example, as shown in FIG. 7, FIG. 7 shows a schematic diagram of a process of superimposing the electric signals collected by the photosensitive units to obtain the sampling data corresponding to the group of photosensitive units. As shown in FIG. 7, each photosensitive unit 211 outputs a corresponding histogram according to the echo light beam, and then the electric signals collected by all or part of the photosensitive units 211 are superimposed at the same time, and the sampling data corresponding to the group of photosensitive units 21 is obtained.

In a specific application, the superimposition unit 212 can perform superimposition calculation by using the following formula:

$$\text{data\_group} = \text{data\_elememt\_1} + \text{data\_elememt\_2} + ..... + \text{data\_elememt\_x};$$

wherein x is the number of the photosensitive units 211 in the group of photosensitive units 21, x is a positive integer, data_elememt_1 represents the electric signal collected by the first photosensitive unit 211, data_elememt_2 represents the electric signal collected by the second photosensitive unit 211, and data_elememt_x represents the electric signal collected by the xth photosensitive unit 211.

It should be noted that the superimposition unit 212 can superimpose the electric signals collected by all the photosensitive units in the group of photosensitive units, or can superimpose the electric signals collected by part of the photosensitive units according to a preset grouping.

For the group of photosensitive units in the form of a two-dimensional matrix, the superimposition unit 212 can superimpose the electric signals collected by part of the photosensitive units in a row, can superimpose the electric signals collected by part of the photosensitive units in a column, or can superimpose the electric signals collected by all the photosensitive units, and the present application does not make a specific limitation in this regard.

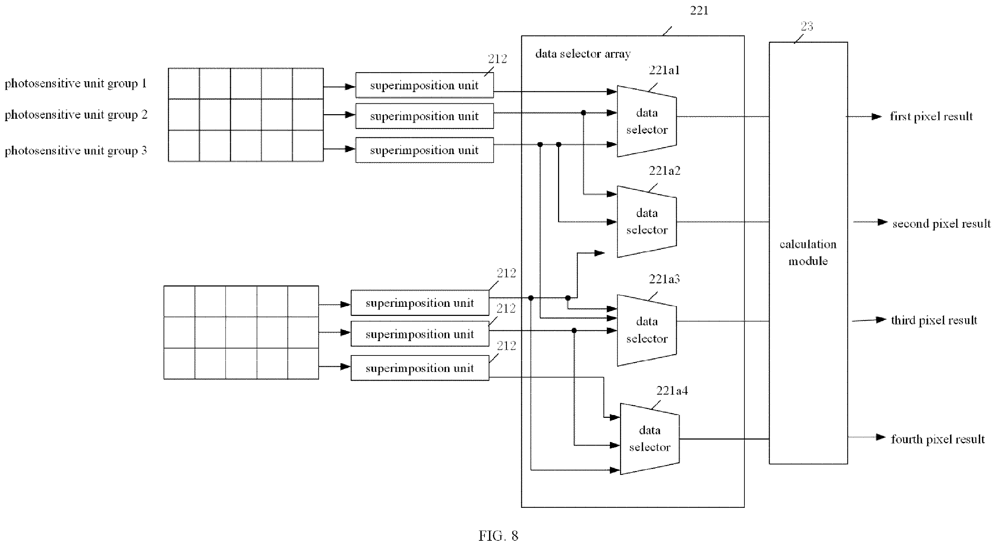

In an embodiment of the present application, the data selection module 22 can include a data selector array 221. For example, FIG. 8 shows a schematic structural diagram of another signal receiving device provided by the present application. As shown in FIG. 8, the data selector array 221 can include a plurality of data selectors 221a. The output of each data selector 221a in the data selector array 221 corresponds to one pixel result. For example, in FIG. 8, the input of the first data selector 221a1 is the sampling data of the photosensitive unit group 1, the sampling data of the photosensitive unit group 2, and the sampling data of the photosensitive unit group 3, and the output sampling data is fused and calculated by the calculation module 23 to obtain a first pixel result; the input of the second data selector 221a2 is the sampling data of the photosensitive unit group 2, the sampling data of the photosensitive unit group 3, and the sampling data of the photosensitive unit group 4, and the output sampling data is fused and calculated by the calculation module 23 to obtain a second pixel result; the input of the third data selector 221a3 is the sampling data of the photosensitive unit group 3, the sampling data of the photosensitive unit group 4, and the sampling data of the photosensitive unit group 5, and the output sampling data is fused and calculated by the calculation module 23 to obtain a third pixel result; and the input of the fourth data selector 221a4 is the sampling data of the photosensitive unit group 4, the sampling data of the photosensitive unit group 5, and the sampling data of the photosensitive unit group 6, and the output sampling data is fused and calculated by the calculation module 23 to obtain a fourth pixel result.

It should be noted that the number of the sampling data selected by each data selector can be determined according to application requirements, and different data selectors can select different numbers of sampling data to meet different pixel detection requirements.

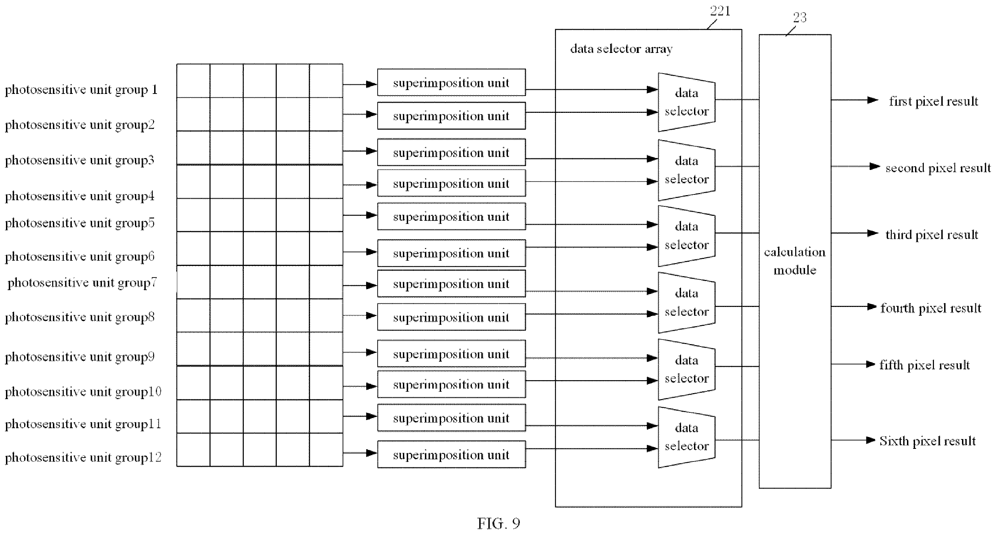

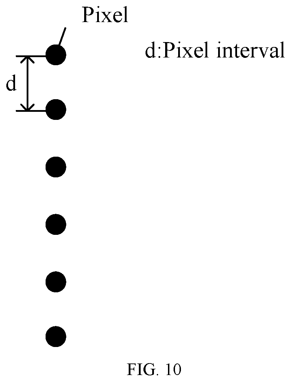

For example, in order to achieve an equidistant pixel distribution result, each data selector can be configured to select an equal number of sampling data. For example, as shown in FIG. 9, for an application scenario requiring an equidistant field of view, such as a scanning composition application scenario, a slow driving scenario, etc., the data selection array can select the same number of sampling data as input. As shown in FIG. 9, every two adjacent photosensitive unit groups are taken as the input of a data selector. For example, the input of the first data selector is sampling data 1 output by the photosensitive unit group 1 and sampling data 2 output by the photosensitive unit group 2, the input of the second data selector is sampling data 3 output by the photosensitive unit group 3 and sampling data 4 output by the photosensitive unit group 4, the input of the third data selector is sampling data 5 output by the photosensitive unit group 5 and sampling data 6 output by the photosensitive unit group 6, the input of the fourth data selector is sampling data 7 output by the photosensitive unit group 7 and sampling data 8 output by the photosensitive unit group 8, the input of the fifth data selector is sampling data 9 output by the photosensitive unit group 9 and sampling data 10 output by the photosensitive unit group 10, and the input of the sixth data selector is sampling data 11 output by the photosensitive unit 11 and sampling data 12 output by the photosensitive unit 12. The obtained pixel distribution result is shown in FIG. 10.

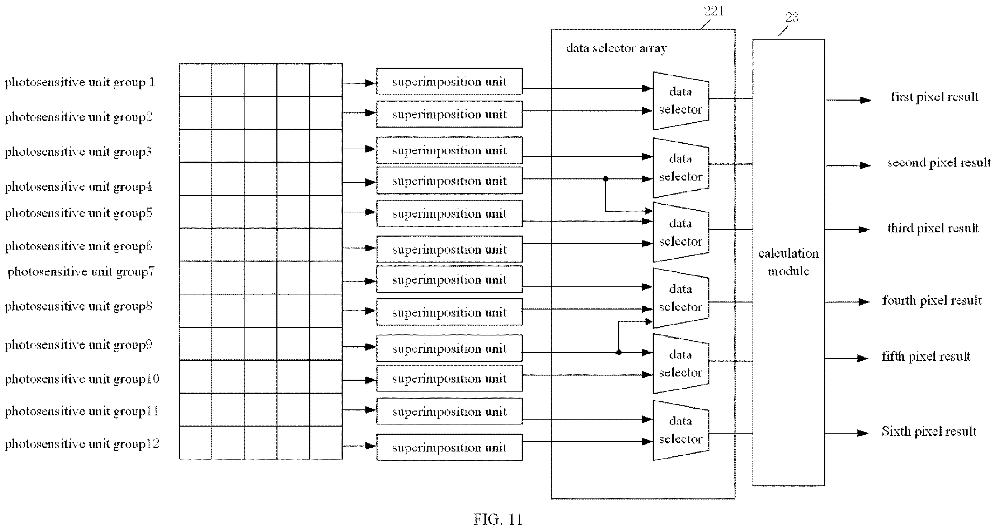

For a pixel requiring an increased pixel density, the data selector can be configured to increase the number of selected sampling data. For example, as shown in FIG. 11, in order to improve the ranging capability of the middle pixels 3 and 4, the data selector array can select more sampling data output by the photosensitive unit groups for the pixels 3 and 4 when selecting the superimposed data. As shown in FIG. 11, for the pixel 1, the data selector selects sampling data 1 output by the photosensitive unit group 1 and sampling data 2 output by the photosensitive unit group 2 as input; for the pixel 2, the data selector selects sampling data 3 output by the photosensitive unit group 3 and sampling data 4 output by the photosensitive unit group 4 as input; for the pixel 3, the data selector selects sampling data 4 output by the photosensitive unit group 4, sampling data 5 output by the photosensitive unit group 5, and sampling data 6 output by the photosensitive unit group 6 as input; for the pixel 4, the data selector selects sampling data 7 output by the photosensitive unit group 7, sampling data 8 output by the photosensitive unit group 8, and sampling data 9 output by the photosensitive unit group 9 as input; for the pixel 5, the data selector selects sampling data 9 output by the photosensitive unit group 9 and sampling data 10 output by the photosensitive unit group 10 as input; and for the pixel 6, the data selector selects sampling data 11 output by the photosensitive unit group 11 and sampling data 12 output by the photosensitive unit group 12 as input.

In other implementations, in order to achieve the effect of the field of view with unevenly distributed intervals, the input of the sampling data can be adjusted by the data selector. For application cases requiring increased pixel density in certain regions, the number of times of collecting the sampling data of the pixels in the region is increased. For example, in a highway driving scenario, the pixel density in the middle field of view needs to be increased, and therefore the number of times of collecting the sampling data of the photosensitive unit groups corresponding to the pixel results in the middle field of view can be adjusted. In a parking scenario, the pixel density in the ground field of view needs to be increased, and therefore the number of times of collecting the sampling data of the photosensitive unit groups corresponding to the pixel results in the ground region can be adjusted.

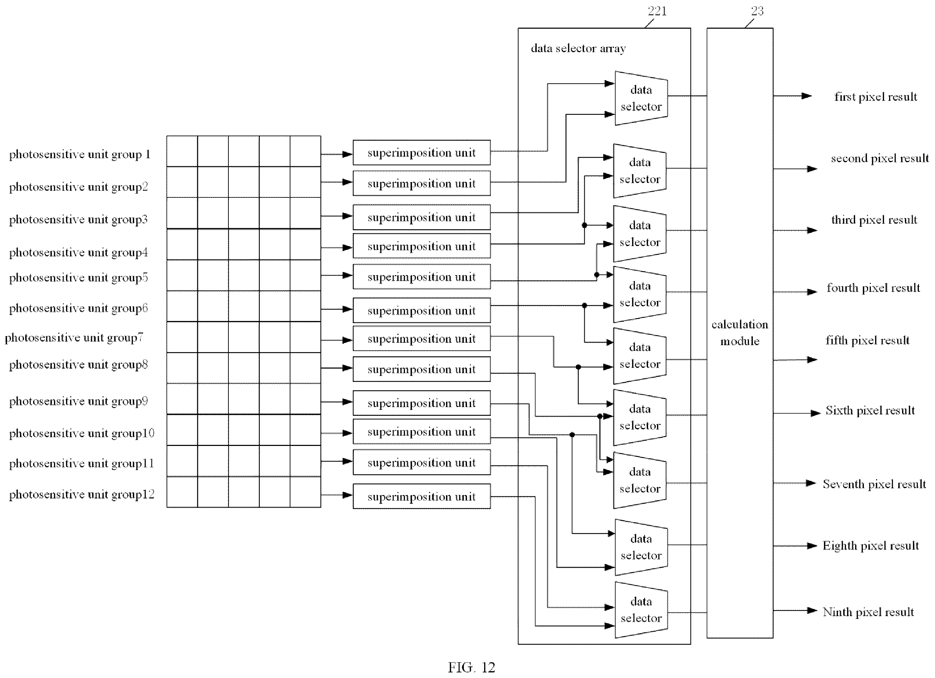

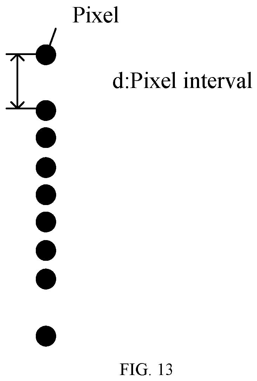

As an example, as shown in FIG. 12, in order to increase the number of pixels in the middle region, the combination intervals of the selection of the pixels on both sides and in the middle are different. For pixel 1, photosensitive unit group 1 and photosensitive unit group 2 are selected; for pixel 2, photosensitive unit group 3 and photosensitive unit group 4 are selected; for pixel 3, photosensitive unit group 4 and photosensitive unit group 5 are selected; for pixel 4, photosensitive unit group 5 and photosensitive unit group 6 are selected; for pixel 5, photosensitive unit group 6 and photosensitive unit group 7 are selected; for pixel 6, photosensitive unit group 7 and photosensitive unit group 8 are selected; for pixel 7, photosensitive unit group 8 and photosensitive unit group 9 are selected; for pixel 8, photosensitive unit group 9 and photosensitive unit group 10 are selected; and for pixel 9, photosensitive unit group 11 and photosensitive unit group 12 are selected. As can be seen from FIG. 12, the signal receiving device shown in FIG. 12 can output a total of 9 pixel results, the sampling data output by the photosensitive unit groups used by the pixels 1 and 9 on both sides are independently used, and the sampling data output by the photosensitive unit groups used by the pixels 4 to 7 in the middle region are pixel distribution results obtained by alternately using multiple times, as shown in FIG. 13. It can be understood that the number of data selectors in the middle region is greater than the number of data selectors in the edge region. As an example, in this embodiment, the number of sampling data of the photosensitive unit groups selected by the data selectors in the center region can also be greater than the number of sampling data of the photosensitive unit groups selected in the edge region.

Therefore, the signal receiving device provided by the embodiment of the application can select the required sampling data through the data selection module according to the ranging capability, the field of view pixel density and other requirements, and can meet the requirements of different pixel densities in different regions.

It should be understood that the data selection module 22 can also output the required sampling data of different pixels in series through only one data selector. The above is only an example and not a limitation. In actual application, how to set the data selector can be selected based on the LiDAR performance requirements and cost requirements, and the application does not make a specific limitation in this regard.

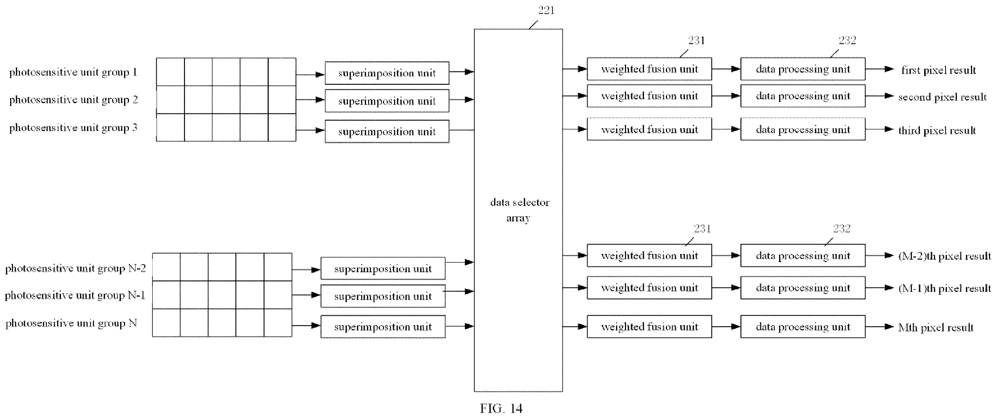

In an embodiment of the application, as shown in FIG. 14, the calculation module 23 can include a weighted fusion unit 231 and a data processing unit 232. The weighted fusion unit 231 is configured to perform weighted fusion on the sampling data output by the data selector 221a to obtain a fusion result. The data processing unit 232 is configured to perform echo data processing and calculation according to the fusion result to obtain a pixel result.

In an implementation, as shown in FIG. 14, the calculation module 23 can include a plurality of weighted fusion units 231 and a plurality of data processing units 232. The number of weighted fusion units 231 is equal to the number of pixel results (and can be equal to the number of data selectors 221a), or can not be equal. FIG. 14 shows the case where the number of weighted fusion units 231 is equal to the number of data processing units 232 and the number of pixel results.

In FIG. 14, each weighted fusion unit 231 can perform weighted fusion on the sampling data output by the corresponding data selector 221a, and then output the fusion result to the corresponding data processing unit for echo data processing and calculation to obtain a pixel result of the corresponding pixel.

The weighted fusion unit 231 can perform weighting on the sampling data output by the different groups of photosensitive units according to the weight coefficients of the groups of photosensitive units, and perform fusion on the weighted sampling data, which can be superposition fusion at the same sampling moment. The weight coefficients of the different groups of photosensitive units can be related to the pixel distribution arrangement and the spot distribution. For example, in the case of selecting the sampling data output by three groups of photosensitive units as the target sampling data, the weight coefficient of the group of photosensitive units in the middle can be set to be higher, for example, 50%, and the weight coefficients of the groups of photosensitive units on both sides can be set to be lower, for example, 25%, etc. For another example, for the case of equal distribution of spots, the weight coefficients of each group of photosensitive units can be selected to be the same value.

It can be understood that in the case that the number of the weighted fusion units 231 and the number of the data processing units 232 are not equal to the number of the pixel results, the weighted fusion units 231 and the data processing units 232 can process the sampling data corresponding to the plurality of pixels in series, for example, in the case that only one weighted fusion unit 231 and one data processing unit 232 are arranged, the sampling data output by each data selector will be processed by the weighted fusion unit 231 and the data processing unit 232 in series.

It should be noted that the number of the weighted fusion units 231 and the number of the data processing units 232 can be set according to actual application requirements, and the application does not make a specific limitation in this regard.

The signal receiving device provided by the embodiment of the application is described in detail above, and the signal receiving method provided by the embodiment of the application is described in detail below in combination with the signal receiving device provided by the above embodiment:

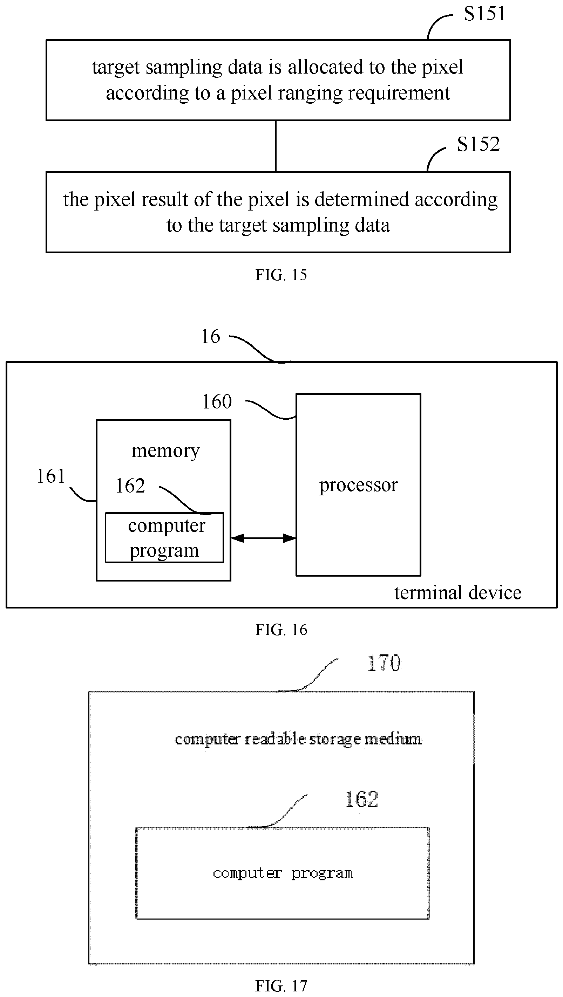

Referring to FIG. 15, FIG. 15 shows an implementation flow diagram of a signal receiving method provided by an embodiment of the application, as shown in FIG. 15, the signal receiving method can include the following steps:

It should be noted that the execution subject of the signal receiving method provided by the embodiment of the application can be the signal receiving device, specifically, the data selection module and the calculation module of the signal receiving device, and of course, can be another data processing device, and the application does not make a specific limitation in this regard.

In S151, target sampling data is allocated to the pixel according to a pixel ranging requirement.

In a specific application, the target sampling data refers to sampling data collected by one or more groups of photosensitive unit groups, and the signal receiving device can allocate sampling data to each pixel according to the pixel ranging requirement required by the pixel, that is, the corresponding sampling data can be selected by the data selector.

It should be noted that which sampling data output by the photosensitive unit groups is included in the target sampling data depends on various index parameters of the LiDAR system, for example, the ranging requirement, the number of encrypted pixels, and the like.

In a specific application, the target photosensitive unit group corresponding to each pixel can be determined according to the pixel ranging requirement, and then the sampling data output by the target photosensitive unit group is obtained as the target sampling data.

In a specific application, when the pixel ranging requirement is an equal-interval field of view distribution requirement, the data of the target photosensitive unit group corresponding to each pixel are equal, as shown in the embodiment of FIG. 9. When the pixel ranging requirement is an unequal-interval field of view distribution requirement, the number of the target photosensitive unit groups corresponding to different pixels are partially or entirely unequal, as shown in the embodiments of FIG. 11 and FIG. 12.

It should be noted that different application scenarios can correspond to different pixel ranging requirements, and therefore, different selection mapping tables can be set based on different application scenarios, and when the target photosensitive unit group is determined, the target photosensitive unit group corresponding to each pixel can be determined based on the selection mapping table corresponding to the application scenario or the pixel ranging requirement.

In S152, the pixel result of the pixel is determined according to the target sampling data.

In a specific application, if the target sampling data only includes the sampling data output by one group of photosensitive units, the sampling data output by the group of photosensitive units can be used for echo data processing and calculation, and then the pixel result such as distance, echo intensity, echo area value, reflectivity and echo pulse width can be determined.

If the target sampling data includes the sampling data output by multiple groups of photosensitive units, the sampling data output by the multiple groups of photosensitive units can be weighted and fused first, and then the pixel result such as distance, echo intensity, echo area value, reflectivity and echo pulse width corresponding to the pixel can be calculated according to the fusion result.

In a specific application, taking the target sampling data including the sampling data output by three groups of photosensitive units as an example, the fusion result after weighted fusion can be expressed as:

$$\text{data\_sum} = \text{coe\_1} * \text{data\_group\_1} + \text{coe\_2} * \text{data\_group\_2} + \text{coe\_3} * \text{data\_group\_3};$$

Wherein, coe_1 represents the weight coefficient of the first group of photosensitive units, data_group_1 is the sampling data output by the first group of photosensitive units, coe_2 represents the weight coefficient of the second group of photosensitive units, data_group_2 is the sampling data output by the second group of photosensitive units, coe_3 represents the weight coefficient of the third group of photosensitive units, and data_group_3 is the sampling data output by the third group of photosensitive units.

It should be noted that the weight coefficients of different groups of photosensitive units can be related to pixel distribution arrangement and spot distribution. For example, when three groups of sampling data output by photosensitive units are selected as the target sampling data, the weight coefficient of the photosensitive unit group located in the middle can be set to be higher, for example, 50%, and the weight coefficients of the photosensitive unit groups on both sides can be set to be lower, for example, 25%, etc. For another example, when the spot distribution is equal, the weight coefficients of each group of photosensitive units can be selected to be the same value.

As can be seen, the signal receiving method provided by the embodiment of the application can also select the sampling data output by the fused groups of photosensitive units according to the pixel ranging requirement. When it is required to increase the ranging performance, the sampling data output by multiple groups of photosensitive units can be selected as the target sampling data, and the pixel result is determined based on this. The ranging performance of the LiDAR can be effectively improved without increasing the LiDAR transmitting power and the number of scans.

It should be understood that the sequence numbers of the steps in the above embodiments do not mean the execution sequence, and the execution sequence of each process should be determined according to its function and inherent logic, and should not constitute any limitation on the implementation process of the embodiments of the application.

FIG. 16 is a schematic diagram of a structure of a terminal device according to another embodiment of the present application. As shown in FIG. 16, the terminal device 16 according to the embodiment comprises a processor 160, a memory 161, and a computer program 162, for example, an image segmentation program, stored in the memory 161 and capable of running on the processor 160. The processor 160 implements the steps in the signal receiving method embodiments when executing the computer program 162, for example, S151-S152 shown in FIG. 15.

The computer program 162 can be divided into one or more modules/units, which are stored in the memory 161 and executed by the processor 160 to complete the present application. The one or more modules/units can be a series of computer program instruction segments capable of completing specific functions, which are used to describe the execution process of the computer program 162 in the terminal device 16. For example, the computer program 162 can be divided into an obtaining unit, a determining unit, and a calculating unit. The specific functions of the units can be referred to the related description in the corresponding embodiments of FIG. 2, and details are not described herein.

The terminal device can include but is not limited to the processor 160 and the memory 161. Those skilled in the art can understand that FIG. 16 is merely an example of the terminal device 16, and does not limit the terminal device 16, which can include more or less components than those shown, or combine certain components, or different components, for example, the terminal device can also include an input/output device, a network access device, a bus, and the like.

The processor 160 can be a central processing unit (CPU), and can also be other universal processors, a digital signal processor (DSP), an application specific integrated circuit (ASIC), a field-programmable gate array (FPGA) or other programmable logic device, discrete gate or transistor logic device, discrete hardware component, or the like. The universal processor can be a microprocessor, or the processor can also be any conventional processor, or the like.

The memory 161 can be an internal storage unit of the terminal device 16, for example, a hard disk or a memory of the terminal device 16. The memory 161 can also be an external storage device of the terminal device 16, for example, a plug-in hard disk, a smart media card (SMC), a secure digital (SD) card, a flash card, or the like equipped on the terminal device 16. Further, the memory 161 can include both the internal storage unit and the external storage device of the terminal device 16. The memory 161 is used for storing the computer program and other programs and data required by the terminal device. The memory 161 can also be used for temporarily storing data that has been output or is to be output.

The embodiment of the application further provides a computer readable storage medium. Referring to FIG. 17, FIG. 17 is a structural schematic diagram of a computer readable storage medium provided by the embodiment of the application. As shown in FIG. 17, the computer readable storage medium 170 stores a computer program 162. When the computer program 162 is executed by a processor, the signal receiving method can be implemented.

The embodiment of the application further provides a computer program product. When the computer program product is run on the terminal device, the terminal device is enabled to implement the signal receiving method.

The embodiment of the application further provides a LiDAR system. The LiDAR system comprises the signal receiving device as described above, and the signal receiving device can also be referred to as a receiving module.

Those skilled in the art can clearly understand that, for the convenience and brevity of description, only the division of the above functional units and modules is exemplified, and in actual application, the above functions can be completed by different functional units and modules according to requirements, that is, the internal structure of the terminal device is divided into different functional units or modules to complete all or part of the functions described above. Each functional unit and module in the embodiment can be integrated in one processing unit, or each unit can be physically present separately, or two or more units can be integrated in one unit. The integrated unit can be implemented in the form of hardware, or in the form of a software functional unit. In addition, the specific names of the functional units and modules are only for convenient mutual distinction, and are not used to limit the protection scope of the application. The specific working processes of the units and modules in the system can refer to the corresponding processes in the preceding method embodiments, and will not be described here.

In the above embodiments, the description of each embodiment has its own focus, and the parts not described or recorded in a certain embodiment can be referred to the related description of other embodiments.

Those of ordinary skill in the art should understand that the units and algorithm steps of each example described in combination with the embodiments disclosed herein can be implemented by electronic hardware, or a combination of computer software and electronic hardware. Whether the functions are performed by hardware or software depends on the specific application and design constraints of the technical solution. Those skilled in the art can use different methods to implement the described functions for each specific application, but such implementation should not be considered to be beyond the scope of the present application.

The above described embodiments are only used to illustrate the technical solutions of the present application, rather than limit the present application; even though the present application has been described in detail with reference to the foregoing embodiments, those skilled in the art should understand that the technical solutions recorded in the foregoing embodiments can still be modified, or some technical features can be replaced by equivalent features; and these modifications or replacements do not make the essential of the corresponding technical solutions deviate from the spirit and scope of the technical solutions of the embodiments of the present application, and should be included in the protection scope of the present application.

**Claims**

**1.** A signal receiving device, comprising:

N photosensitive unit groups, each photosensitive unit group including a plurality of photosensitive units, the photosensitive unit groups configured to receive echo light beams and output corresponding sampling data; a data selection module connected to the N photosensitive unit groups and configured to select target sampling data according to a pixel ranging requirement; and
a calculation module connected to the data selection module and configured to perform echo data processing and calculation based on the target sampling data to obtain a pixel result.

2. The signal receiving device according to claim 1, further comprising:
   superimposition units, each connected to a corresponding photosensitive unit group, and configured to superimpose electrical signals collected by the photosensitive units of the photosensitive unit group to obtain sampling data of the photosensitive unit group.

3. The signal receiving device according to claim 1 or 2, wherein the data selection module comprises a data selector array, the data selector array comprising a plurality of data selectors, each data selector corresponding to one pixel result, and each data selector configured to determine a target photosensitive unit group according to a corresponding pixel ranging requirement and output the sampling data from the target photosensitive unit group to the calculation module.

4. The signal receiving device according to claim 3, wherein the data selectors corresponding to different detection fields of view have different numbers.

5. The signal receiving device according to claim 4, wherein the number of data selectors corresponding to an edge detection region is less than the number of data selectors corresponding to a center detection region.

6. The signal receiving device according to any one of claims 1 to 5, wherein the number of photosensitive units in the photosensitive unit group corresponding to the edge detection region is less than the number of photosensitive units in the photosensitive unit group corresponding to the center detection region.

7. The signal receiving device according to claim 3, wherein the calculation module comprises:

   a weighted fusion unit, connected with the data selector, configured to perform weighted fusion on the sampling data output by the data selector to obtain a fusion result; and
   a data calculation unit, connected with the weighted fusion unit, configured to perform echo data processing and calculation according to the fusion result to obtain the pixel result.

8. The signal receiving device according to any one of claims 1 to 7, wherein the photosensitive unit comprises a silicon photomultiplier and/or an avalanche photodiode.

9. A signal receiving method, applied to the signal receiving device according to any one of claims 1 to 8 the signal receiving method comprising:

   allocating target sampling data to a pixel according to a pixel ranging requirement, the target sampling data being sampling data output by a target photosensitive unit group; and
   determining a pixel result of the pixel according to the target sampling data.

10. The signal receiving method according to claim 9, wherein the allocating target sampling data to the pixel according to a pixel ranging requirement comprises:

    determining a target photosensitive unit group corresponding to each pixel according to a pixel ranging requirement; and
    obtaining sampling data output by the target photosensitive unit group.

11. The signal receiving method according to claim 9, wherein:

    when the pixel ranging requirement is an equal-interval field of view distribution requirement, the number of target photosensitive unit groups corresponding to each pixel is equal; and
    when the pixel ranging requirement is an unequal-interval field of view distribution requirement, the numbers of target photosensitive unit groups corresponding to different pixels are partially or wholly unequal.

12. The signal receiving method according to claim 9, wherein the determining a pixel result of the pixel according to the target sampling data comprises:

if the target sampling data comprises sampling data output by a photosensitive unit group, performing echo data processing and calculation according to the sampling data output by the photosensitive unit group to obtain the pixel result; and

if the target sampling data comprises sampling data output by a plurality of photosensitive unit groups, fusing the sampling data output by the plurality of photosensitive unit groups to obtain a fusion result, and performing echo data processing and calculation according to the fusion result to obtain the pixel result.

13. The signal receiving method according to claim 11, wherein if the target sampling data comprises sampling data output by a plurality of photosensitive unit groups, the fusing the sampling data output by the plurality of photosensitive unit groups to obtain a fusion result and performing echo data processing and calculation according to the fusion result to obtain the pixel result comprises:

determining a weight coefficient for each photosensitive unit group;

performing weighted fusion according to the weight coefficient of each photosensitive unit group and the sampling data output by each photosensitive unit group to obtain the fusion result; and

performing echo data processing and calculation according to the fusion result to obtain the pixel result.

14. A LiDAR system, comprising the signal receiving device according to any one of claims 1 to 8.

15. A terminal device, comprising a memory, a processor, and a computer program stored in the memory and executable on the processor, wherein the processor implements the signal receiving method according to any one of claims 9 to 13 when executing readable instructions of the computer program.

FIG. 1

FIG. 2

FIG. 3

group of light sensing units 1 → first sampling data

group of light sensing units 2 → second sampling data

group of light sensing units 3 → third sampling data

211  21

**FIG. 4**

photosensitive unit group

211

**FIG. 5**

photosensitive unit group1 → superimposition unit → first sampling data

photosensitive unit group2 → superimposition unit → second sampling data

photosensitive unit group3 → superimposition unit → third sampling data

211  212  212  212

**FIG. 6**

data_elememt_1

time

data_elememt_2

time

data_elememt_3

time

data_elememt_4

time

data_elememt_x

time

superimpose

the superimposed date

time

FIG. 7

first pixel result

second pixel result

third pixel result

fourth pixel result

23

calculation module

221

data selector array

221a1 — data selector
221a2 — data selector
221a3 — data selector
221a4 — data selector

212 — superimposition unit
superimposition unit
superimposition unit

212 — superimposition unit
212 — superimposition unit
212 — superimposition unit

photosensitive unit group 1
photosensitive unit group 2
photosensitive unit group 3

FIG. 8

17

FIG. 9

Pixel

d:Pixel interval

d

FIG. 10

FIG. 11

photosensitive unit group 1
photosensitive unit group2
photosensitive unit group3
photosensitive unit group4
photosensitive unit group5
photosensitive unit group6
photosensitive unit group7
photosensitive unit group8
photosensitive unit group9
photosensitive unit group10
photosensitive unit group11
photosensitive unit group12

superimposition unit

data selector array

data selector

calculation module

first pixel result
second pixel result
third pixel result
fourth pixel result
fifth pixel result
Sixth pixel result

221

23

EP 4 703 765 A1

20

FIG. 12

Pixel

d:Pixel interval

FIG. 13

photosensitive unit group 1 → superimposition unit → 

photosensitive unit group 2 → superimposition unit →

photosensitive unit group 3 → superimposition unit →

221
data selector array

231
weighted fusion unit →

232
data processing unit → first pixel result

weighted fusion unit → data processing unit → second pixel result

weighted fusion unit → data processing unit → third pixel result

photosensitive unit group N-2 → superimposition unit →

photosensitive unit group N-1 → superimposition unit →

photosensitive unit group N → superimposition unit →

231
weighted fusion unit →

232
data processing unit → (M-2)th pixel result

weighted fusion unit → data processing unit → (M-1)th pixel result

weighted fusion unit → data processing unit → Mth pixel result

FIG. 14

S151

target sampling data is allocated to the pixel
according to a pixel ranging requirement

S152

the pixel result of the pixel is determined according
to the target sampling data

FIG. 15

16

memory

162

computer
program

160

processor

161

terminal device

FIG. 16

170

computer readable storage medium

162

computer program

FIG. 17

## EUROPEAN SEARCH REPORT

**Application Number**

EP 25 19 8462

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/296735 A1 (DRUML NORBERT [AT] ET AL) 21 September 2023 (2023-09-21) * paragraphs [0040] - [0045], [0070], [0077], [0084], [0086], [0108] - [0113]; claim 1; figures 3B, 4A-H, 11A, 11B * | 1-15 | INV. G01S7/4863 G01S7/487 G01S17/42 G01S17/10 |
| A | WO 2024/073653 A2 (SEMICONDUCTOR COMPONENTS IND LLC [US]) 4 April 2024 (2024-04-04) * figure 13 * | 1-15 | |

**TECHNICAL FIELDS SEARCHED (IPC)**

G01S

The present search report has been drawn up for all claims

| Place of search | Date of completion of the search | Examiner |
|---|---|---|
| Munich | 19 December 2025 | Grübl, Alexander |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 19 8462

This annex lists the patent family members relating to the patent documents cited in the above-mentioned European search report.
The members are as contained in the European Patent Office EDP file on
The European Patent Office is in no way liable for these particulars which are merely given for the purpose of information.

19-12-2025

| Patent document cited in search report | Publication date | Patent family member(s) | Publication date |
|---|---|---|---|
| US 2023296735 A1 | 21-09-2023 | CN 113945906 A | 18-01-2022 |
| | | DE 102021118356 A1 | 20-01-2022 |
| | | US 2022018941 A1 | 20-01-2022 |
| | | US 2023296735 A1 | 21-09-2023 |
| WO 2024073653 A2 | 04-04-2024 | NONE | |

EPO FORM P0459

For more details about this annex : see Official Journal of the European Patent Office, No. 12/82